# EUROPEAN PATENT SPECIFICATION

(11) **EP 2 833 098 B1**
(45) Date of publication and mention of the grant of the patent: **26.07.2017**
(21) Application number: 14173571.2
(22) Date of filing: 24.06.2014
(51) Int. Cl.: G01C 21/28, G01S 19/49, G08G 1/005, G01C 21/16, G01C 22/00, G08G 1/00

(54) **Method and apparatus for detecting and sharing vehicle location**
Verfahren und Vorrichtung zur Erkennung und gemeinsamen Nutzung einer Fahrzeugposition
Procédé et appareil permettant de détecter et de partager la position d'un véhicule

(30) Priority: 30.07.2013 US 201313954601
(43) Date of publication of application: 04.02.2015
(73) Proprietor: HERE Global B.V., 5611 ZT Eindhoven (NL)
(72) Inventor: Tuukkanen, Marko, 14913 Schlenzer (DE); Beaurepaire, Jerome, 10715 Berlin (DE)
(74) Representative: Cohausz & Florack

(56) References cited:
- GB-A- 2 368 739
- JP-A- 2013 076 677
- US-A1- 2011 288 728
- US-A1- 2012 277 992
- US-B1- 6 650 999

## Description

### BACKGROUND

Service providers and device manufacturers (e.g., wireless, cellular, etc.) are continually challenged to deliver value and convenience to consumers by, for example, providing compelling network services. One area of interest has been the development of location-based services to provide users of mobile devices (e.g., mobile phones, tablets, phablets, personal navigation devices (PNDs), etc.) with driving assistant services to improve the quality of their travels, especially while driving. Often, after a passage of time (e.g., time spent shopping, attending a sporting event or a concert, etc.), users have difficulty remembering where they parked their vehicles (e.g., on which floor of a parking garage or in which space of a parking lot). Current vehicles may have the ability to update their location to one or more location-based services or cloud services. However, when the location of a vehicle or a device associated with a user of the vehicle has not been recently updated and a connection with one or more location-based technologies (e.g., global positioning system (GPS)) is lost (e.g., where lines of sight are obstructed by a parking garage, a tunnel, a building, mountains, tall trees, etc.), the user and the various services may not know the vehicle's current location and therefore the user cannot use such services to find his or her vehicle. Accordingly, services providers and device manufacturers face significant technical challenges in providing a service that determines a vehicle's location without user interaction when the vehicle is incapable of updating its current location information.

JP 2013-076677 relates to devices and methods for correcting movement history data acquired by walk positioning processing. The history data includes autonomous navigation positioning data in places where GPS Satellite waves are unreceivable. The autonomous navigation positioning may produce a series of position data forming a locus T1. At a GPS positioning resumption point, a correction processing section will correct the position data concerning the position of every place point of the autonomous route data.

GB2368739 discloses that dead reckoning is used to solve a location problem when a user is out of range of GPS coverage. A starting position (xl, yl) is determined by tracking movements from a first position where GPS coverage is not available to a second position (u) where GPS coverage is available. The starting position is then determined by backtracking from this known position. The positional information may be stored at the receiver and later recalled to define the first position relative to a known third position, enabling guidance back to the first position.

### SOME EXAMPLE EMBODIMENTS

Therefore, there is a need for an approach for providing a service that determines a vehicle's location without user interaction when the vehicle is incapable of updating its current location.

The invention is defined by the appended claims.

According to one embodiment, a method comprises determining a first set of dead reckoning data associated with at least one vehicle from a first point to a second point within an area in which one or more non-dead reckoning location technologies are unavailable or not used. The method also comprises determining a second set of dead reckoning data associated with at least one device of at least one user of the at least one vehicle from the second point to a third point, wherein the one or more non-dead reckoning location technologies is available or used at the third point. The method further comprises processing and/or facilitating a processing of the first set of dead reckoning data and the second set of dead reckoning data to determine a location of the second point.

According to another embodiment, an apparatus comprises at least one processor, and at least one memory including computer program code for one or more computer programs, the at least one memory and the computer program code configured to, with the at least one processor, cause, at least in part, the apparatus to determine a first set of dead reckoning data associated with at least one vehicle from a first point to a second point within an area in which one or more non-dead reckoning location technologies are unavailable or not used. The apparatus is also caused to determine a second set of dead reckoning data associated with at least one device of at least one user of the at least one vehicle from the second point to a third point, wherein the one or more non-dead reckoning location technologies is available or used at the third point. The apparatus is further caused to process and/or facilitate a processing of the first set of dead reckoning data and the second set of dead reckoning data to determine a location of the second point.

According to another embodiment, a computer-readable storage medium carries one or more sequences of one or more instructions which, when executed by one or more processors, cause, at least in part, an apparatus to determine a first set of dead reckoning data associated with at least one vehicle from a first point to a second point within an area in which one or more non-dead reckoning location technologies are unavailable or not used. The apparatus is also caused to determine a second set of dead reckoning data associated with at least one device of at least one user of the at least one vehicle from the second point to a third point, wherein the one or more non-dead reckoning location technologies is available or used at the third point. The apparatus is further caused to process and/or facilitate a processing of the first set of dead reckoning data and the second set of dead reckoning data to determine a location of the second point.

According to another embodiment, an apparatus comprises means for determining a first set of dead reckoning data associated with at least one vehicle from a first point to a second point within an area in which one or more non-dead reckoning location technologies are unavailable or not used. The apparatus also comprises means for determining a second set of dead reckoning data associated with at least one device of at least one user of the at least one vehicle from the second point to a third point, wherein the one or more non-dead reckoning location technologies is available or used at the third point. The apparatus further comprises means for processing and/or facilitating a processing of the first set of dead reckoning data and the second set of dead reckoning data to determine a location of the second point.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing a service that determines a vehicle's location without user interaction when the vehicle is incapable of updating its current location, according to one embodiment;
FIG. 2 is a diagram of the components of a location platform, according to one embodiment;
FIGs. 3-5 are flowcharts of processes for providing a service that determines a vehicle's location without user interaction when the vehicle is incapable of updating its current location, according to one embodiment;
FIG. 6 is a diagram of an example use case depicting the utilization of the processes of FIGs. 3-5, according to various embodiments;
FIG. 7 is a diagram of user interfaces utilized in the processes of FIGs. 3-5, according to various embodiments;
FIG. 8 is a diagram of hardware that can be used to implement an embodiment of the invention;
FIG. 9 is a diagram of a chip set that can be used to implement an embodiment of the invention; and
FIG. 10 is a diagram of a mobile terminal (e.g., handset) that can be used to implement an embodiment of the invention.

### DESCRIPTION OF SOME EMBODIMENTS

Examples of a method, apparatus, and computer program for providing a service that determines a vehicle's location without user interaction when the vehicle is incapable of updating its current location are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

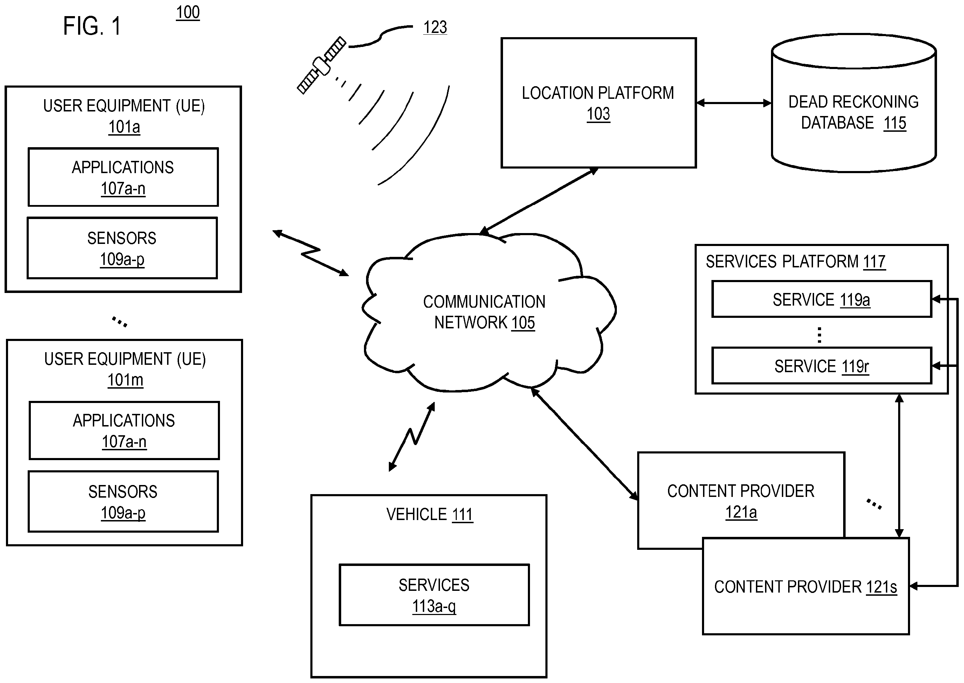

FIG. 1 is a diagram of a system capable of providing a service that determines a vehicle's location without user interaction when the vehicle is incapable of updating its current location, according to one embodiment. As previously discussed, one area of interest among service providers and device manufacturers has been the development of location-based services to provide users of mobile devices with driving assistant services to improve the quality of their travels, especially while driving. Often, after a passage of time, users have difficulty remembering where they parked their vehicles (e.g., on which floor of a parking garage or in which space of a parking lot). Current vehicles may have the ability to update their location to a location-based service or cloud service, for example. However, vehicle data connections with such location-based services or cloud services are generally optimized and therefore the vehicles do not update their respective positions all of the time. Rather, the updates are generally done at a regular interval (e.g., every 15 minutes). In addition, in certain contexts, no updates are sent by a vehicle (e.g., while roaming, when a fixed monthly data limit has been reached, etc.). Moreover, when a vehicle or a device associated with a user of the vehicle has not updated its location recently and a connection with one or more location-based technologies (e.g., GPS) is lost, the user and the various services will not know the vehicle's location and therefore the user cannot use such services to find his or her vehicle.

To address this problem, a system 100 of FIG. 1 introduces the capability to provide a service that determines a vehicle's location without user interaction when the vehicle is incapable of updating its current location. As shown in FIG. 1, the system 100 comprises one or more user equipment (UE) 101a-101m (e.g., mobile phones, tablets, phablets, PNDs, etc.)(also collectively referred to as UEs 101) having connectivity to location platform via a communication network 105. The UEs 101 also include or have access to one or more applications 107a-107n (also collectively referred to as applications 107). By way of example, the applications 107 may include mapping and/or navigation applications, location-based applications (e.g., enabling location "check-ins"), an Internet browser, social networking applications, etc. In addition, the UEs 101 include one or more sensors 109a-109p (also collectively referred to as sensors 109). In particular, the sensors may include, for example, a GPS receiver, an altitude sensor, a magnetometer, a compass, a luminosity sensor, a near field communication (NFC) sensor, an acceleration sensor, or a combination thereof. The system 100 also includes at least one vehicle 111 (e.g., a car) including or having access to one or more vehicle-related services 113a-113q (also collectively referred to as services 113) having connectivity to the location platform 103 via the communication network 105 and having connectivity to the UEs 101 via one or more short-range wireless communication technologies (e.g., Bluetooth®, Bluetooth LE (BLE), NFC, wireless fidelity (WiFi), or a combination thereof). More specifically, the vehicle-related services 113 (e.g., a communication service, a navigation service, a web service, or a combination thereof) enable the vehicle 111 to notify the location platform 103 of its location and the status of one or more systems associated with the vehicle 111 (e.g., locks, lights, engine) as well as provide the UEs 101 with dead reckoning data associated with the vehicle 111.

In one embodiment, the location platform 103 may include or be associated with at least one dead reckoning database 115. In one example embodiment, the location platform 103 may exist in whole or in part within a UE 101, or independently and the at least one dead reckoning database 115 may exist in whole or in part within the location platform 103. The at least one dead reckoning database 115 may include, at least in part, dead reckoning data associated with the vehicle 111 (e.g., locations, speeds, directions, elapsed times, etc.) and/or dead reckoning data associated with the UEs 101 (e.g., movement patterns including directions, altitudes, accelerations, etc.). The at least one dead reckoning database 115 may also include one or more credentials (e.g., a username and password) associated with the vehicle 111, the UEs 101, or a combination thereof.

The UEs 101 are also connected to a services platform 117 via the communication network 105. In one embodiment, the services platform 117 includes one or more services 119a-119r (also collectively referred to as services 119). The services 119 may include a wide variety of services such as content provisioning services for one or more of the applications 107, the vehicle-related services 113, or a combination thereof. By way of example, the services 119 may include mapping and/or navigation services (e.g., last mile navigation), cloud-based services, a single sign-on service, etc. In one embodiment, the UEs 101, the services platform 117, and the services 119 also have connectivity to one or more content providers 121a-121s (also collectively referred to as content providers 121). The content providers 121 also may provision a wide variety of content (e.g., maps, navigation routes, etc.) to the components of the system 100.

In one embodiment, the location platform 103, the applications 107 (e.g., a mapping and/or navigation application), the vehicle-related services 113, or a combination thereof may utilize one or more location-based technologies (e.g., GPS, cellular triangulation, Assisted GPS (A-GPS), etc.) to determine a location of a UE 101, the vehicle 111, or a combination thereof to make a request to one or more services 119 for location-based data (e.g. mapping and/or navigation information) based on a position relative to the UE 101, the vehicle 111, or a combination thereof. For example, a UE 101 may include a GPS receiver 109 to obtain geographic coordinates from the satellites 123 to determine its location when possible.

By way of example, the communication network 105 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), WiFi, wireless LAN (WLAN), Bluetooth®, Internet Protocol (IP) data casting, satellite, mobile ad-hoc network (MANET), and the like, or any combination thereof.

The UEs 101 are any type of mobile terminal, or portable terminal including a mobile handset, station, unit, device, multimedia computer, multimedia tablet, Internet node, communicator, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, or any combination thereof, including the accessories and peripherals of these devices, or any combination thereof. It is also contemplated that the UEs 101 can support any type of interface to the user (such as "wearable" circuitry, etc.).

In one example use case, a user enters the vehicle 111 located at an origin point (e.g., a home or office). The current location of the vehicle 111 may be presented to the user on a mapping and/or navigation application 107 of a UE 101 or as part of an in-dash display, for example. Once the user starts driving towards a point of interest (e.g., a shopping mall or a sporting event or a concert), a vehicle-related service 113 or an application 107 sends a notification to a service 119 (e.g. a location-based service or cloud service) informing the service 119 that the original location (i.e., the origin) is no longer valid. Thereafter, the vehicle 111 may update its location along the way at regular intervals (e.g., every 15 minutes). However, when the vehicle 111 reaches the first point, the vehicle 111 and the UE 101 both lose connectivity with the one or more non-dead reckoning location technologies. Therefore, the last known location (e.g., at some interval of time prior to reaching the first point) is no longer valid and therefore neither the service 119 nor the UE 101 know the vehicle's present location. Consequently, the user cannot take advantage of any vehicle-related services 113 nor can the user share the location of the vehicle 111 since it is no longer known.

To address this problem, in one embodiment, the system 100 determines a first set of dead reckoning data associated with the vehicle 111 (e.g., locations, speeds, directions, elapsed times, etc.) from a first point to a second point within an area in which one or more non-dead reckoning location technologies are unavailable or not used (e.g., inside a parking garage). More specifically, the first point is the point where a connection between the vehicle 111 and/or a UE 101 and one or more non-dead location technologies such as GPS, cellular triangulation, A-GPS, or a combination thereof are lost. The second point is a location of the vehicle 111 (e.g., a parking space) that a user is attempting to return to in order to find his or her vehicle after some period of time (e.g., after shopping, attending an event, etc.). In one example use case, when the luminosity of the surrounding environment decreases suddenly, a luminosity sensor 109 associated with a UE 101 can trigger the system 100 to save the last know location of the vehicle 111. Similarly, the system 100 can also save the last know location of the vehicle 111 if a luminosity sensor 109 or a luminosity sensor associated with the vehicle 111 detects that the lights of the vehicle 111 are being turned on (e.g., when entering a parking garage).

In one embodiment, the system 100 processes and/or facilitates a processing of the sensors associated with the vehicle 111, a UE 101 (e.g., the sensors 109), or a combination thereof to determine the first set of dead reckoning data. By way of example the one or more sensors associated with the vehicle 111 may include, at least in part, accelerometers, odometers, gyroscopes, a GPS receiver, other conventional types of inertial navigation systems, etc. and the one or more sensors 109 associated with the at least one device may include, at least in part, a GPS receiver, an altitude sensor, a magnetometer, a compass, a luminosity sensor, an NFC sensor, an acceleration sensor, or a combination thereof. In particular, the first set of dead reckoning data provides the system 100 with a rough estimate as to the location of the vehicle 111 subsequent to entering the area where a connection with the one or more non-dead reckoning location technologies is no longer available or used.

In one or more embodiments, the system 100 processes and/or facilitates a processing of the one or more sensors to determine that the at least one vehicle has been parked at the second point. More specifically, the determination of the second set of dead reckoning data is based, at least in part, on the vehicle 111 being parked. For example, the system 100 may determine that the vehicle 111 has parked based, at least in part, on one or more of the vehicle-related services 113 informing the system 100 that the engine is no longer running, the doors have been locked, the lights have been turned off, or a combination thereof.

In one embodiment, the system 100 causes, at least in part, at least one transfer of the first dead reckoning data from the vehicle 111 to a UE 101 based, at least in part, on the vehicle 111 being parked at the second point. In particular, the at least one transfer is based, at least in part, on one or more short-range wireless communication technologies (e.g., Bluetooth®, BLE, NFC, WiFi, or a combination thereof). In example use cases where a UE 101 determines the first set of dead reckoning data rather than the vehicle 111 (e.g., where the vehicle 111 is not equipped with the requisite sensors and/or is traveling in an offline mode), a transfer between the vehicle 111 and a UE 101 is not required since the UE 101 already has the data stored.

In one embodiment, the system 100 determines a second set of dead reckoning data associated with a UE 101 of a user of the vehicle 111 from the second point (e.g., the parking space) to a third point. In particular, the third point is a location where the one or more non-dead reckoning location technologies (e.g., GPS) are again available or used. For example, in the example use case discussed above, the third point may be an area immediately outside of the parking garage, where sightlines with the satellites 123, for example, are no longer obstructed by the parking structure. Consequently, the system 100 can accurately determine the location of the UE 101.

In one or more embodiments, the system 100 processes and/or facilitates a processing of the one or more sensors associated with a UE 101 (e.g., the sensors 109) to determine the second set of dead reckoning data. More specifically, once a user parks the vehicle 111, the UE 101 (e.g., a mobile phone) records and stores the movement of the device to detect the user's movement patterns between the second point and the third point. For example, the movement patterns may include, at least in part, directions, altitudes, accelerations, or a combination thereof, associated with the UE 101 and/or the user.

In one embodiment, the system 100 causes, at least in part, at least one update of the second set of dead reckoning data, the location of a UE 101, or a combination thereof based, at least in part, on the one or more non-dead reckoning location technologies becoming available or used at the third point. In one example use case, the system 100 may cause, at least in part, at least one transmission of the updated second set of dead reckoning data, the location of the UE 101, or a combination thereof to one or more services 119 (e.g., a location-based service or a cloud service) as soon as connectivity with the one or more non-dead reckoning location technologies becomes available.

In one or more embodiments, the system 100 processes and/or facilitates a processing of the first set of dead reckoning data and the second set of dead reckoning data to determine the location of the second point (i.e., where the vehicle 111 is parked). By way of example, as a result of the calculations by the system 100, the system 100 can calculate on which floor of the parking garage, for example, the vehicle 111 is parked. Further, the system 100 verifies the location of the vehicle 111 by comparing the location of the third point (i.e., where the user recovered connectivity) with the second set of dead reckoning data.

In one embodiment, the system 100 causes, at least in part, at least one update of the location of the second point on a UE 101 (e.g., a mobile phone), one or more services 119 (e.g., a location-based service or a cloud service), or a combination thereof. Consequently, a user can once again view the location of the vehicle 111 on a mapping and/or navigation application 103, for example. In one example use case, depending on the availability of one or more indoor maps of the particular structure (e.g., a parking garage), the user may even be able to view the location of the vehicle 111 in three dimensions.

In one or more embodiments, the system 100 may also determine location information associated with one or more other vehicles in close proximity to where the vehicle 111 has parked based, at least in part, on one or more queries by the vehicle 111, a UE 101, or a combination thereof, wherein the system 100 can then use the location information to further determine the location of the second point (i.e., where the vehicle 111 is parked). For example, the location of the one or more other vehicles may already be known by one or more services 119 based, at least in part, on a user of the one or more other vehicles gaining connectivity to the one or more non-dead reckoning location technologies (e.g., GPS). In another example use case, the vehicle 111 may be entering a parking garage, for example, and is about to lose connectivity with the one or more non-dead reckoning location technologies. However, the vehicle 111 is also connected (e.g., via the communication network 105 or a service 119) with one or more other vehicles that still has access to the one or more non-dead reckoning location technologies. As a result, the vehicle 111 can save or update its last know location by transferring the vehicle 111's location data through the one or more other vehicle's access to the one or more non-dead reckoning location technologies.

By way of example, the UEs 101, the location platform 103, the applications 107, the sensors 109, the at least one vehicle 111, the vehicle-related services 113, the dead reckoning database 115, the services platform 117, the services 119, the content providers 121, and the satellites 123 communicate with each other and other components of the communication network 105 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

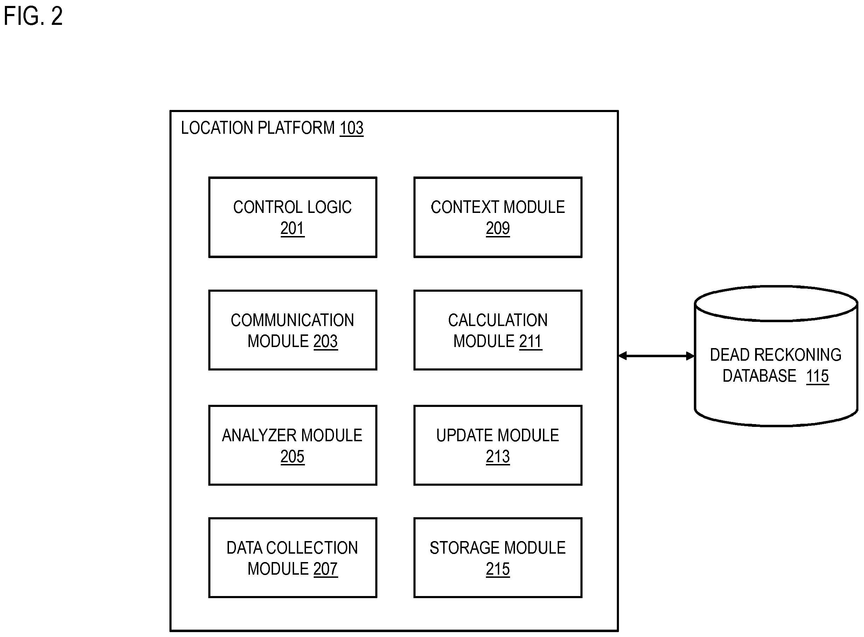

FIG. 2 is a diagram of the components of the location platform 103, according to one embodiment. By way of example, the location platform 103 includes one or more components for providing a service that determines a vehicle's location without user interaction when the vehicle is incapable of updating its current location. It is contemplated that the functions of these components may be combined in one or more components or performed by other components of equivalent functionality. In this embodiment, the location platform 103 includes a control logic 201, a communication module 203, an analyzer module 205, a data collection module 207, a context module 209, a calculation module 211, an update module 213, and a storage module 215.

In one embodiment, the control logic 201 oversees tasks, including tasks performed by the communication module 203, the analyzer module 205, the data collection module 207, the context module 209, the calculation module 211, the update module 213, and the storage module 215. For example, although the other modules may perform the actual task, the control logic 201 may determine when and how those tasks are performed or otherwise direct the other modules to perform the task.

The communication module 203 in certain embodiments is used for communication between the UEs 101, the location platform 103, the applications 107, the sensors 109, the at least one vehicle 111, the vehicle-related services 113, the dead reckoning database 115, the services platform 117, the services 119, the content providers 121, and the satellites 123. The communication module 203 may also be used to communicate commands, requests, data, etc. In one embodiment, the communication module 203 is used to cause, at least in part, at least one transfer of the first set of dead reckoning data from the at least one vehicle (e.g., the vehicle 111) to the at least one device (e.g., a UE 101) based, at least in part, on the at least one vehicle being parked at the second point. In particular, the communication module 203 facilitates the transfer of the data using one or more short-range wireless communication technologies (e.g., Bluetooth®, BLE, NFC, WiFi, or a combination thereof). The communication module 203 may also be used to determine location information associated with one or more other vehicles in close proximity to the where the at least one vehicle (e.g., the vehicle 111) has been parked based, at least in part, on one or more queries by the at least one vehicle, the at least one device (e.g., a UE 101), or a combination thereof. By way of example, the communication module 203 may be able to determine the location information if the one or more other vehicles and the at least one vehicle are connected via a location-based service or a cloud service.

In one embodiment, the analyzer module 205, in connection with the data collection module 207, is used to determine a first set of dead reckoning data associated with at least one vehicle (e.g., the vehicle 111) from a first point to a second point within an area in which one or more non-dead reckoning location technologies are unavailable or not used. By way of example, the analyzer module 205 analyzes the locations, directions, speeds, elapsed times, etc. associated with the vehicle 111 between the origin (e.g., a home or office) and the first point (e.g., an entrance of a parking garage) to detect the vehicle 111's route before and after the one or more non-dead reckoning location technologies became unavailable to the communication module 203. The analyzer module 205 may also be used, in connection with the data collection module 207, to determine a second set of dead reckoning data associated with at least one device (e.g., a UE 101) of at least one user of the at least one vehicle from the second point to a third point, wherein the one or more non-dead reckoning location technologies is available or used at the third point. In particular, the analyzer module 205 analyzers the recorded movement patterns of a UE 101 and the user of the device including, at least in part, directions, altitudes, accelerations, etc.

The data collection module 207 in certain embodiments is used to process and/or facilitate a processing of one or more sensors associated with the at least one vehicle, the at least one device, or a combination thereof to determine the first set of dead reckoning data. For example, the data collection module 207 may collect data from the accelerometers, odometers, gyroscopes, a GPS receiver, other types of conventional inertial navigation sensors, etc. associated with the vehicle 111 to determine the locations, directions, speeds, elapsed times, etc. of the vehicle 111 between an origin (e.g., a home or office) and the first point (e.g., the point where the one or more non-dead reckoning location technologies become unavailable or not used). The data collection module 207 may also be used to process and/or facilitate a processing of the one or more sensors associated with a UE 101 (e.g., the sensors 109) to determine the second set of dead reckoning data. For example, the data collection module 207 may collect data from a GPS receiver, an altitude sensor, a magnetometer, a compass, a luminosity sensor, a NFC sensor, an acceleration sensor, or a combination thereof associated with a UE 101.

In one embodiment, the context module 209, in connection with the data module 207, processes and/or facilitates a processing of the one or more sensors to determine that the at least one vehicle has parked at the second point. By way of example, the context module 209 can determine from the sensors associated with the at least one vehicle that the vehicle is no longer moving. Further, the context module 209 can confirm that the at least one vehicle has been parked as opposed to simply stopping by collecting information from one or more of the vehicle-related services 113 about a status of the one or more systems of the at least one vehicle (e.g., engine, locks, and/or lights).

The calculation module 211 in certain embodiments is used to process and/or facilitate a processing of the first set of dead reckoning data and the second set of dead reckoning data to determine a location of the second point. In particular, the calculation module 211 combines the first and second sets of dead reckoning data to retroactively determine the location of the second point once the one or more non-dead reckoning location technologies become available to the at least one device at the third point. In one embodiment, it is contemplated that the calculation module 211 can determine on which floor of a parking garage, for example, the at least one vehicle is parked by comparing the location where the at least one device (e.g., a UE 101) recovered access to the one or more non-dead reckoning location technologies to the prior movement patterns of the at least one device and the user (i.e., the second set of dead reckoning data).

In one embodiment, the update module 213 is used to cause, at least in part, at least one update of the second set of dead reckoning data, the location of the at least one device, or a combination thereof based, at least in part, on the one or more non-dead reckoning location technologies becoming available or used at the third point. In addition to improving the accuracy of the second set of dead reckoning data, the update module 213, in connection with the communication module 203, may also cause, at least in part, at least one update of the data, the location of the at least one device (e.g., a UE 101), or a combination thereof to one or more location-based services or cloud services (e.g., a service 119) as soon as connectivity with the one or more non-dead reckoning location technologies becomes available. The update module 213 may also be used to cause, at least in part, at least one update of the location of the second point on the at least one device (e.g., a UE 101 such as a mobile phone), one or more location-based services (e.g., a mapping and/or navigation service 119), or a combination thereof. Consequently, a user may be able to view the location of his or her vehicle on a mapping and/or navigation application 107 and/or obtain walking instructions back to his or her vehicle from the third point, for example.

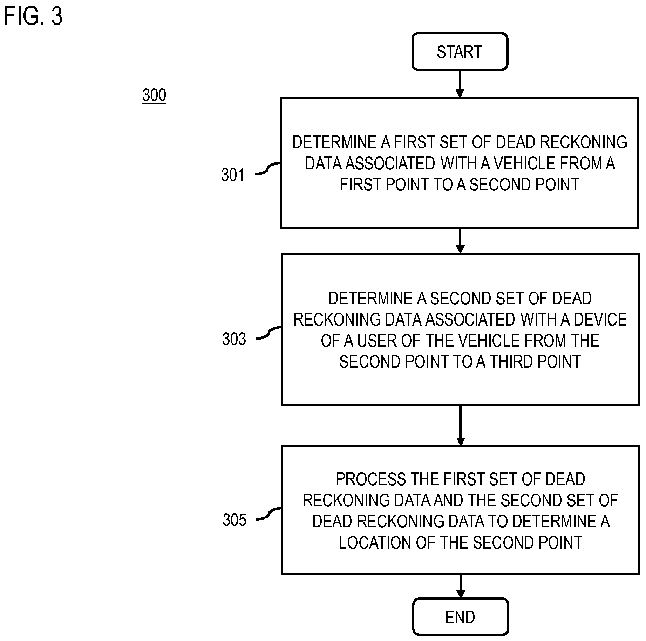

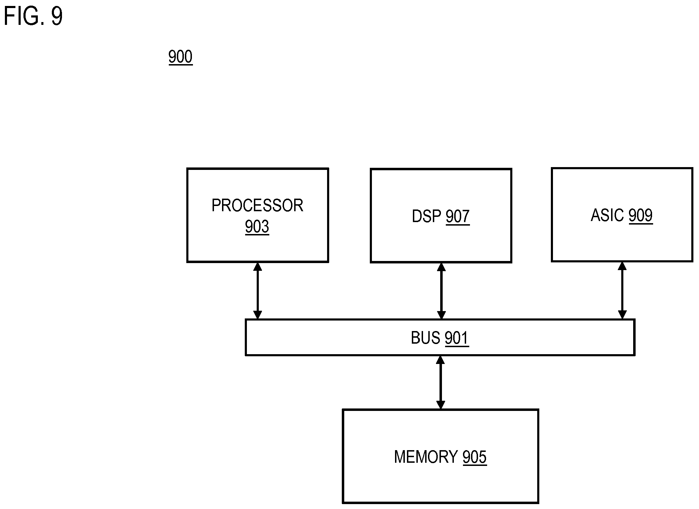

FIGs. 3-5 are flowcharts of processes for providing a service that determines a vehicle's location without user interaction when the vehicle is incapable of updating its current location, according to one embodiment. In one embodiment, the location platform 103 performs the process 300 and is implemented in, for instance, a chip set including a processor and a memory as shown in FIG. 9.

In step 301, the location platform 103 determines a first set of dead reckoning data associated with at least one vehicle from a first point to a second point within an area in which one or more non-dead reckoning location technologies are unavailable or not used. By way of example, the first set of dead reckoning data (i.e., sensor data) includes locations, speeds, directions, elapsed times, etc. associated with the at least one vehicle (e.g., a car) between a point of origin (e.g., a home or office) and the first point, the point where the one or more non-dead reckoning location technologies (e.g., GPS, cellular triangulation, A-GPS) become unavailable or not used (e.g., where sightlines to one or more satellites are obstructed) and between the first point and a second point (e.g., the point where the at least one vehicle is parked). More specifically, the location platform 103 uses the first set of dead reckoning data to track the location of the at least one vehicle between an origin and the first point.

In step 303, the location platform 103 determines a second set of dead reckoning data associated with at least one device of at least one user of the at least one vehicle from the second point to a third point, wherein the one or more non-dead reckoning location technologies is available or used at the third point. In particular, the second set of dead reckoning data (i.e., sensor data) is a recording of the at least one device and/or the user of the device's movement patterns, including directions, altitudes, accelerations, etc. between the point where the at least one vehicle is parked and the third point, where the one or more non-dead reckoning location technologies become available (e.g., an area immediately outside of the structure obstructing sightlines to one or more one or more satellites).

In step 305, the location platform 103 processes and/or facilitates a processing of the first set of dead reckoning data and the second set of dead reckoning data to determine a location of the second point. By way of example, the location platform 103 combines the first and second sets of dead reckoning data to calculate the location where the at least one vehicle is parked (e.g., on which floor of the parking garage). Moreover, the location platform 103 compares the location where the at least one device recovered access or availability to the one or more non-dead reckoning location technologies (i.e., the third point) and the prior movement patterns of the at least one device and the user (i.e., the second set of dead reckoning data) to verify the determined location of the parked vehicle.

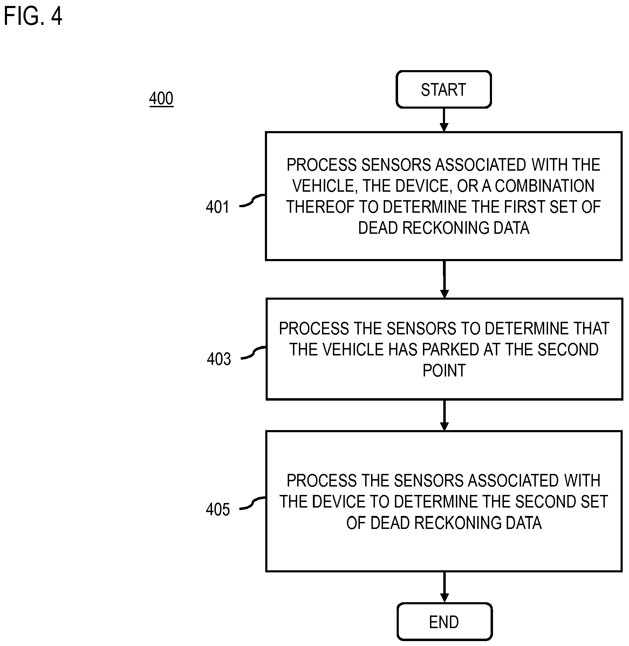

FIG. 4 depicts a process 400 of processing and/or facilitating a processing of one or more sensors associated with at least one vehicle, at least one device, or a combination thereof. In one embodiment, the location platform 103 performs the process 400 and is implemented in, for instance, a chip set including a processor and a memory as shown in FIG. 9. In step 401, the location platform 103 processes and/or facilitates a processing of one or more sensors associated with the at least one vehicle, the at least one device, or a combination thereof to determine the first set of dead reckoning data. By way of example, the one or more sensors associated with the at least one vehicle may include, at least in part, accelerometers, odometers, gyroscopes, a GPS receiver, other conventional types of inertial navigation systems, etc. By way of further example, the one or more sensors associated with the at least one device (e.g., a mobile phone, a tablet, a phablet, a PND, etc.) may include, at least in part, a GPS receiver, an altitude sensor, a magnetometer, a compass, a luminosity sensor, an NFC sensor, an acceleration sensor, or a combination thereof. In one example use case, the luminosity sensor may be used by the location platform 103 as a trigger to determine when the at least one vehicle reaches the first point. For example, when the luminosity of the surrounding environment decreases suddenly (e.g., when driving into a parking garage during the day), the location platform 103 can determine from the luminosity sensor that the at least one vehicle has reached the first point associated with the first set of dead reckoning data. Similarly, if a luminosity sensor associated with the at least one vehicle or the at least one device detects that the lights of the vehicle 111 are being turned on (e.g., when entering a parking garage), then the location platform 103 can also determine that the at least one vehicle has entered a space where the one or more non-dead reckoning location technologies are likely to become unavailable or not used. In one example use case, if the at least one vehicle is in traveling in an offline mode and/or the at least one vehicle lacks one or more requisite sensors, the location platform 103 can determine the first set of dead reckoning data from the at least one device (e.g. a mobile phone or PND).

In step 403, the location platform 103 processes and/or facilitates a processing of the one or more sensors to determine that the at least one vehicle has parked at the second point, wherein the determination of the second set of dead reckoning data is based, at least in part, on the at least one vehicle being parked at the second point. In addition, to the one or more sensors associated with the vehicle (e.g., a GPS receiver, accelerometers, odometers, etc.) that the location platform 103 can process to determine the status of the at least one vehicle, the location platform 103 may also process one or more sensors associated with one or more systems of the vehicle (e.g., engine, locks, and/or lights) to further determine whether the vehicle is running, stopped, parked, etc.

In step 405, the location platform 103 processes and/or facilitates a processing of the one or more sensors associated with the at least one device to determine the second set of dead reckoning data. More specifically, the second set of dead reckoning data is a recording of the movement patterns of the at least one device and the user of the device once the at least one vehicle is parked including, at least in part, directions, altitudes, accelerations, etc. between the second point and a third point, the point in which the one or more non-dead reckoning location technologies are again available or may be used by the at least one device. As previously discussed, the location platform 103 uses the second set of dead reckoning data to retroactively determine the location of the second point by comparing the location where the non-dead reckoning location technologies again became available and the prior movement patterns of the at least one device and the user of the device.

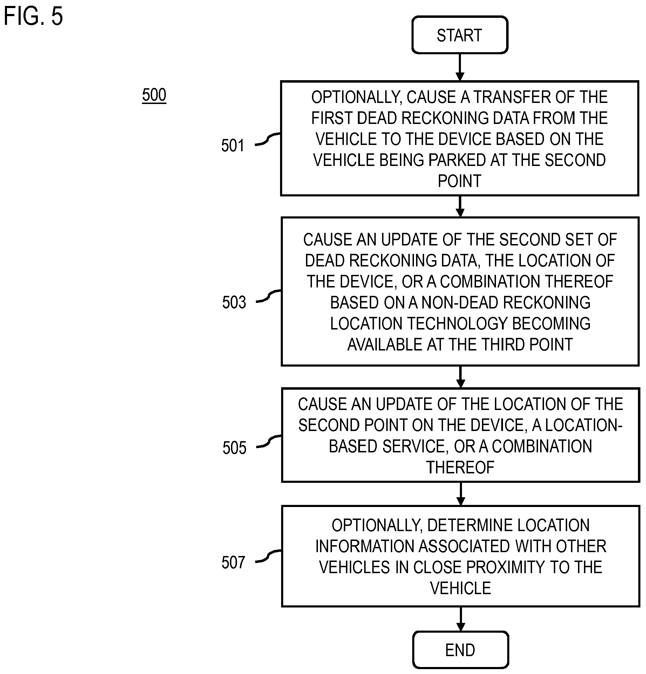

FIG. 5 depicts a process 500 of determining, updating and/or transferring dead reckoning data, location information, or a combination thereof. In one embodiment, the location platform 103 performs the process 500 and is implemented in, for instance, a chip set including a processor and a memory as shown in FIG. 9. In step 501, the location platform 103 optionally causes, at least in part, at least one transfer of the first set of dead reckoning data from the at least one vehicle to the at least one device based, at least in part, on the at least one vehicle being parked at the second point, wherein the at least one transfer is based, at least in part, on one or more short-range wireless communication technologies. As previously discussed, when the at least one vehicle has the requisite sensors and/or is traveling in an online mode, the at least one vehicle can transfer the first set of dead reckoning data to the at least one device once the vehicle is parked. However, if the at least one vehicle does not possess the requisite sensors and/or the vehicle has traveled in an offline mode, the transfer is not required. By way of example, the at least one vehicle may transfer the first set dead reckoning data to the at least one device using one or more short-range wireless communication technologies (e.g., Bluetooth®, BLE, NFC, WiFi, or a combination thereof).

In step 503, the location platform 103 causes, at least in part, at least one update of the second set of dead reckoning data, the location of the at least one device, or a combination thereof based, at least in part, on the one or more non-dead reckoning location technologies becoming available or used at the third point, wherein the location of the second point is further based, at least in part, on the at least one update. In one embodiment, it is contemplated that the location platform 103's updating of the second set of dead reckoning data, the location of the at least one device, or a combination thereof based, at least in part, on the availability of the one or more non-dead reckoning location technologies can improve the accuracy of the second set of dead reckoning data. In addition, in one example use case, the location platform 103 may cause, at least in part, at least one transmission of the updated second set of dead reckoning data, the location of the at least one device (e.g., a mobile phone), or a combination thereof to one or more location-based services, cloud services, or a combination thereof.

In step 505, the location platform 103 causes, at least in part, at least one update of the location of the second point on the at least one device, one or more location-based services, or a combination thereof. For example, the location platform 103 can make the location of the at least one vehicle available to a mapping and/or navigation application of the at least one device so that a user can see how to get back to his or her car from the third point or one or more associated points thereafter (e.g., a shopping mall, a stadium, an airport, etc.). In one embodiment, if one or more indoor maps of the overall location are available, it is contemplated that the mapping and/or navigation application, for example, may provide the user with a three-dimensional view of the location of the at least one vehicle. Further, as a result of updating the location of the second point on one or more location-based services, one or more of the vehicle-related services and features (e.g., route guidance) may again become available to a user of the vehicle and/or shared in general.

In step 507, the location platform 103 optionally determines location information associated with one or more other vehicles in close proximity to where the at least one vehicle has parked based, at least in part, on one or more queries from the at least one vehicle, the at least one device, or a combination thereof, wherein the location of the second point is further based, at least in part, on the location information. By way of example, if the at least one vehicle and one or more vehicles in close proximity to the at least one vehicle are connected (e.g., via one or more location-based services or cloud services) and the one or more other vehicles already knows its location (e.g., because a user of another vehicle has reached a third point), the location platform 103 may use the location information associated with the other vehicle to improve the location information associated with the second point (i.e., where the at least one vehicle is parked). In another example use case, if the at least one vehicle is entering an area where the one or more non-dead reckoning location technologies are unavailable or not used (e.g., within a parking garage) and the at least one vehicle is connected with one or more other vehicles (e.g., a friend's vehicle being driven directly behind the at least one vehicle) and the one or more other vehicles still have access to the one or more non-dead reckoning location technologies, then the location platform 103 can cause, at least in part, a transfer of location data associated with the at least one vehicle to one or more location-based services or cloud services, for example, through the ongoing access of the one or more other vehicles.

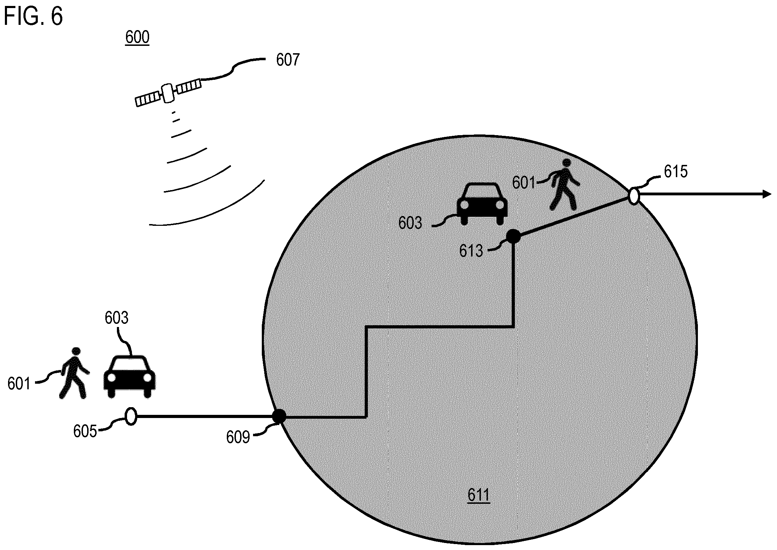

FIG. 6 is a diagram of an example use case depicting the utilization of the processes of FIGs. 3-5, according to various embodiments. In one embodiment, a user 601 enters at least one vehicle 603 (e.g., a car) at an origin 605 (e.g., a home or office) to drive to a point of interest (e.g., a shopping mall or athletic stadium)(not shown for illustrative convenience)). In particular, the user 601 may use a mapping and/or navigation application (e.g., a mapping and/or navigation application 107) associated with the vehicle 603 (e.g., an in-dash navigation system) and/or at least one device associated with the user 601 (e.g., a mobile phone or PND) (not shown for illustrative convenience) to view his or her location along the way. In one embodiment, while the user 601 and the vehicle 603 are at or near the origin 605, the mapping and/or navigation application may show the vehicle 603 as being located at the origin 605.

In one embodiment, as the user 601 begins to drive the vehicle 603 towards the point of interest, either the vehicle 603 or the at least one device may cause, at least in part, at least one update of the location of the vehicle 603. More specifically, the vehicle 603 or the at least one device may notify one or more location-based services or cloud services, for example, via one or more satellites 607, for example, that the origin 605 is no longer valid for the vehicle 603. The vehicle 603 and/or the at least one device may or may not provide the one or more location-based services or cloud services with location updates along the way. In one embodiment, the location of the at least one device is saved on a regular interval (e.g., every 15 minutes) after the origin 605 is invalidated.

In one embodiment, when the vehicle 603 reaches a first point 609 of an area 611 (e.g. a parking garage associated with the point of interest) in which one or more non-dead reckoning location technologies (e.g., GPS, cellular triangulation, A-GPS, etc.) are unavailable or not used (e.g., because the area 611 obstructs sightlines to the satellites 607), the system 100 determines a first set of dead reckoning data associated with the vehicle 603 (e.g., locations, directions, speeds, elapsed times, etc.) from a first point 609 to a second point 613 (e.g., where the vehicle 603 is parked) within the area 611. In one embodiment, the system 100 determines the last known location of the vehicle 603 based on the first set of dead reckoning data and then causes, at least in part, the data to be saved in one or more databases (e.g., a dead reckoning database 115) and/or transferred from the vehicle 603 to the at least one device.

In one embodiment, once the system 100 determines that the vehicle 603 is parked at the second location 613 based, at least in part, a status of one or more systems associated with the vehicle 603 such as the engine, lights, locks, etc., for example, the system 100 determines a second set of dead reckoning data associated with the at least one device of the user 601 from the second point 613 to a third point 615. In particular, the third point 615 is where the one or more non-dead reckoning location technologies are again available or used (e.g., an area directly outside of the parking garage 611 where the sightlines to the one or more satellites 607 are not obstructed). In particular, the second set of dead reckoning data consists of one or more recorded movement patterns of the at least one device and the user 601 including, at least in part, directions, altitudes, accelerations, etc.

In one or more embodiments, once the user 601 reaches the third point 615, the system 100 processes and/or facilitates a processing of the first set of dead reckoning data and the second set of dead reckoning data to determine a location of the second point 613 (i.e., where the vehicle 603 is parked). More specifically, the system 100 combines the data and calculates where within the "no network" area 611 the vehicle 603 is parked. For example, even if the area 611 is a parking garage, the system 100 can determine on which floor of the parking garage the vehicle 603 is parked. Further, the system 100 can calculate the location of the second point 613 by comparing the location of the third point 615 with the second set of dead reckoning data. Thereafter, the system 100 causes, at least in part, at least one update of the location of the second point 613 on the at least one device, one or more location-based services (e.g., a cloud service), or a combination thereof. Consequently, one or more vehicle-related services are now available to the user 601 (e.g., accurate navigation back to the vehicle 603 after a long day of shopping or attending a sporting event or a concert).

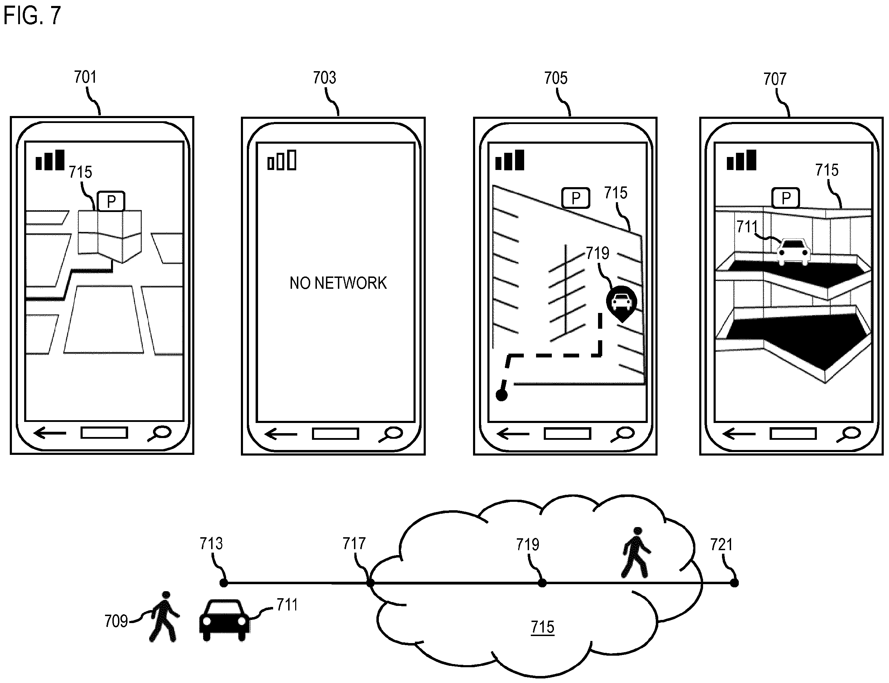

FIG. 7 is a diagram of user interfaces utilized in the processes of FIGs. 3-5, according to various embodiments. As shown, the example user interfaces of FIG. 7 include one or more user interface elements and/or functionalities created and/or modified based, at least in part, on information, data, and/or signals resulting from the processes (e.g., 300, 400, and 500) described with respect to FIGs. 3-5. More specifically, FIG. 7 illustrates four (4) user interfaces (e.g., interfaces 701, 703, 705, and 707) of a user 709 associated with a vehicle 711, wherein the interfaces 701-707 depict corresponding views of a mapping and/or navigation application (e.g., an application 103) in an example use case where the user 709 drives the vehicle 711 from an origin point 713 (e.g., a home or office) to a parking garage 715 where both the vehicle and the interfaces 701-707 lose connectivity with one or more non-dead reckoning location technologies (e.g., GPS, cellular triangulation, A-GPS, etc.) upon entering the parking garage at a first point 717.

In one embodiment, on or about the time the user 709 enters the vehicle 711 at an origin 713 (e.g., a home or office), the user may be able to view his or her location relative to the destination (e.g., the parking garage 715) on a mapping and/or navigation application as depicted in interface 701. While the user 709 drives the vehicle 711 towards the parking structure 715, the vehicle 711 and/or the interface 701 may send one or more notifications to one or more location-based services or cloud services (e.g., a service 119), for example, periodically updating the location of the vehicle 111 (e.g., every 15 minutes). In one embodiment, the location of the vehicle 111 may also be saved on a regular interval (e.g., every 15 minutes) on the interface 701 after the origin 713 is no longer valid with respect to the vehicle 711.

In this example use case, when the user 709 drives the vehicle 711 into the parking garage 715, both the vehicle 711 and interface 701 lose connectivity with one or more non-dead reckoning location technologies (e.g., GPS, cellular triangulation, A-GPS, etc.) at a first point 717 as depicted in interface 703. In one embodiment, the system 100 determines a first set of dead reckoning data associated with the vehicle 711 from the first point 717 to a second point 719 within the parking area 715. In particular, the system 100 processes and/or facilitates a processing of one or more sensors associated with the vehicle 711, the interfaces 701 and 703, or a combination thereof to determine the first set of dead reckoning data (i.e., sensor data). For example, the system 100 can determine the locations, directions, speeds, and elapsed times of the vehicle 711 and the interface 701 from the origin 713 to the first point 717 and can then determine the first set of dead reckoning data associated with the vehicle 711 and the interface 703 from the first point 717 to the second point 719 (e.g., the location where the user 709 parks the vehicle 711).

In one embodiment, once the user 709 exits the vehicle 711, the interface 703 records movement patterns associated with the interface 703 and the user 709 including, at least in part, directions, altitudes, accelerations, etc. and the system 100 can then use these recorded movement patterns to determine a second set of dead reckoning data (i.e., sensor data) associated with the interface 703 from the second point 719 to a third point 721. In particular, the third point 721 is a point at which the one or more non-dead reckoning location technologies are again available as depicted in the interfaces 705 and 707.

In one embodiment, once the user 709 reaches the third point 721, the system 100 processes and/or facilitates a processing of the first set of dead reckoning data and the second set of dead reckoning data to determine the location of the second point 719 (i.e., the spot where the user 709 parked the vehicle 711). As a result, the system 100 is able to accurately determine where within the "no network" area 715 (e.g., the parking garage) the user 709 parked the vehicle 711. Moreover, in certain embodiments, the system 100 can also detect on which floor of the parking garage 715 the vehicle 711 is parked (e.g., the 2^{nd} Floor in this example use case). More specifically, the system 100 compares the location of the third point 721 to the second set of dead reckoning data determined between the second point 719 and the third point 721 to verify the accuracy of the location 719.

In one embodiment, the system 100 causes, at least in part, at least one updates of the location of the location of the second point 719 on the interfaces 705 and 707, one or more location-based services (e.g., a cloud service), or a combination thereof. Consequently, the user 709 can now access one or more vehicle-related services and features of the interfaces 705 and 707. By way of example, the system 100 can present the location of the vehicle 711 on the interface 705 in a way that enables the user 709 to see how to get back to the vehicle 711 from the third point 721 or one or more associated points thereafter (e.g., a shopping mall, a stadium, an airport, etc.). In one embodiment, it is also contemplated that if one or more indoor maps are available, the system 100 can provide the user with a three-dimensional view of the location of the vehicle 711 as depicted in interface 707.

The processes described herein for providing a service that determines a vehicle's location without user interaction when the vehicle is incapable of updating its current location may be advantageously implemented via software, hardware, firmware or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

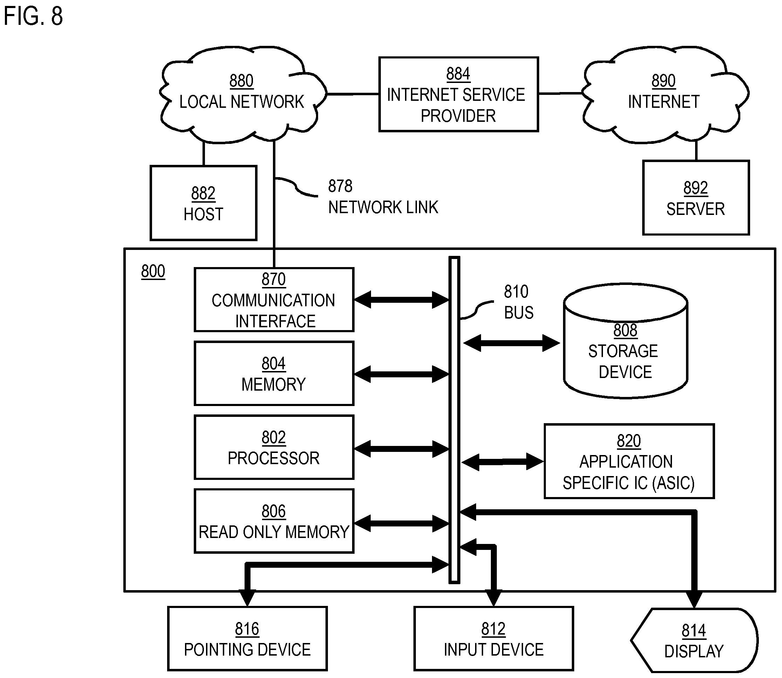

FIG. 8 illustrates a computer system 800 upon which an embodiment of the invention may be implemented. Although computer system 800 is depicted with respect to a particular device or equipment, it is contemplated that other devices or equipment (e.g., network elements, servers, etc.) within FIG. 8 can deploy the illustrated hardware and components of system 800. Computer system 800 is programmed (e.g., via computer program code or instructions) to provide a service that determines a vehicle's location without user interaction when the vehicle is incapable of updating its current location as described herein and includes a communication mechanism such as a bus 810 for passing information between other internal and external components of the computer system 800. Information (also called data) is represented as a physical expression of a measurable phenomenon, typically electric voltages, but including, in other embodiments, such phenomena as magnetic, electromagnetic, pressure, chemical, biological, molecular, atomic, subatomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 800, or a portion thereof, constitutes a means for performing one or more steps of providing a service that determines a vehicle's location without user interaction when the vehicle is incapable of updating its current location.

A bus 810 includes one or more parallel conductors of information so that information is transferred quickly among devices coupled to the bus 810. One or more processors 802 for processing information are coupled with the bus 810.

A processor (or multiple processors) 802 performs a set of operations on information as specified by computer program code related to provide a service that determines a vehicle's location without user interaction when the vehicle is incapable of updating its current location. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 810 and placing information on the bus 810. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 800 also includes a memory 804 coupled to bus 810. The memory 804, such as a random access memory (RAM) or any other dynamic storage device, stores information including processor instructions for providing a service that determines a vehicle's location without user interaction when the vehicle is incapable of updating its current location. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or any other static storage device coupled to the bus 810 for storing static information, including instructions, that is not changed by the computer system 800. Some memory is composed of volatile storage that loses the information stored thereon when power is lost. Also coupled to bus 810 is a non-volatile (persistent) storage device 808, such as a magnetic disk, optical disk or flash card, for storing information, including instructions, that persists even when the computer system 800 is turned off or otherwise loses power.

Information, including instructions for providing a service that determines a vehicle's location without user interaction when the vehicle is incapable of updating its current location, is provided to the bus 810 for use by the processor from an external input device 812, such as a keyboard containing alphanumeric keys operated by a human user, a microphone, an Infrared (IR) remote control, a joystick, a game pad, a stylus pen, a touch screen, or a sensor. A sensor detects conditions in its vicinity and transforms those detections into physical expression compatible with the measurable phenomenon used to represent information in computer system 800. Other external devices coupled to bus 810, used primarily for interacting with humans, include a display device 814, such as a cathode ray tube (CRT), a liquid crystal display (LCD), a light emitting diode (LED) display, an organic LED (OLED) display, a plasma screen, or a printer for presenting text or images, and a pointing device 816, such as a mouse, a trackball, cursor direction keys, or a motion sensor, for controlling a position of a small cursor image presented on the display 814 and issuing commands associated with graphical elements presented on the display 814. In some embodiments, for example, in embodiments in which the computer system 800 performs all functions automatically without human input, one or more of external input device 812, display device 814 and pointing device 816 is omitted.

In the illustrated embodiment, special purpose hardware, such as an application specific integrated circuit (ASIC) 820, is coupled to bus 810. The special purpose hardware is configured to perform operations not performed by processor 802 quickly enough for special purposes. Examples of ASICs include graphics accelerator cards for generating images for display 814, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 800 also includes one or more instances of a communications interface 870 coupled to bus 810. Communication interface 870 provides a one-way or two-way communication coupling to a variety of external devices that operate with their own processors, such as printers, scanners and external disks. In general the coupling is with a network link 878 that is connected to a local network 880 to which a variety of external devices with their own processors are connected. For example, communication interface 870 may be a parallel port or a serial port or a universal serial bus (USB) port on a personal computer. In some embodiments, communications interface 870 is an integrated services digital network (ISDN) card or a digital subscriber line (DSL) card or a telephone modem that provides an information communication connection to a corresponding type of telephone line. In some embodiments, a communication interface 870 is a cable modem that converts signals on bus 810 into signals for a communication connection over a coaxial cable or into optical signals for a communication connection over a fiber optic cable. As another example, communications interface 870 may be a local area network (LAN) card to provide a data communication connection to a compatible LAN, such as Ethernet. Wireless links may also be implemented. For wireless links, the communications interface 870 sends or receives or both sends and receives electrical, acoustic or electromagnetic signals, including infrared and optical signals, that carry information streams, such as digital data. For example, in wireless handheld devices, such as mobile telephones like cell phones, the communications interface 870 includes a radio band electromagnetic transmitter and receiver called a radio transceiver. In certain embodiments, the communications interface 870 enables connection to the communication network 105 for providing a service that determines a vehicle's location without user interaction when the vehicle is incapable of updating its current location to the UEs 101.

The term "computer-readable medium" as used herein refers to any medium that participates in providing information to processor 802, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 808. Volatile media include, for example, dynamic memory 804. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 820.

Network link 878 typically provides information communication using transmission media through one or more networks to other devices that use or process the information. For example, network link 878 may provide a connection through local network 880 to a host computer 882 or to equipment 884 operated by an Internet Service Provider (ISP). ISP equipment 884 in turn provides data communication services through the public, world-wide packet-switching communication network of networks now commonly referred to as the Internet 890.

A computer called a server host 892 connected to the Internet hosts a process that provides a service in response to information received over the Internet. For example, server host 892 hosts a process that provides information representing video data for presentation at display 814. It is contemplated that the components of system 800 can be deployed in various configurations within other computer systems, e.g., host 882 and server 892.

At least some embodiments of the invention are related to the use of computer system 800 for implementing some or all of the techniques described herein. According to one embodiment of the invention, those techniques are performed by computer system 800 in response to processor 802 executing one or more sequences of one or more processor instructions contained in memory 804. Such instructions, also called computer instructions, software and program code, may be read into memory 804 from another computer-readable medium such as storage device 808 or network link 878. Execution of the sequences of instructions contained in memory 804 causes processor 802 to perform one or more of the method steps described herein. In alternative embodiments, hardware, such as ASIC 820, may be used in place of or in combination with software to implement the invention. Thus, embodiments of the invention are not limited to any specific combination of hardware and software, unless otherwise explicitly stated herein.

The signals transmitted over network link 878 and other networks through communications interface 870, carry information to and from computer system 800. Computer system 800 can send and receive information, including program code, through the networks 880, 890 among others, through network link 878 and communications interface 870. In an example using the Internet 890, a server host 892 transmits program code for a particular application, requested by a message sent from computer 800, through Internet 890, ISP equipment 884, local network 880 and communications interface 870. The received code may be executed by processor 802 as it is received, or may be stored in memory 804 or in storage device 808 or any other non-volatile storage for later execution, or both. In this manner, computer system 800 may obtain application program code in the form of signals on a carrier wave.

Various forms of computer readable media may be involved in carrying one or more sequence of instructions or data or both to processor 802 for execution. For example, instructions and data may initially be carried on a magnetic disk of a remote computer such as host 882. The remote computer loads the instructions and data into its dynamic memory and sends the instructions and data over a telephone line using a modem. A modem local to the computer system 800 receives the instructions and data on a telephone line and uses an infra-red transmitter to convert the instructions and data to a signal on an infra-red carrier wave serving as the network link 878. An infrared detector serving as communications interface 870 receives the instructions and data carried in the infrared signal and places information representing the instructions and data onto bus 810. Bus 810 carries the information to memory 804 from which processor 802 retrieves and executes the instructions using some of the data sent with the instructions. The instructions and data received in memory 804 may optionally be stored on storage device 808, either before or after execution by the processor 802.

FIG. 9 illustrates a chip set or chip 900 upon which an embodiment of the invention may be implemented. Chip set 900 is programmed to provide a service that determines a vehicle's location without user interaction when the vehicle is incapable of updating its current location as described herein and includes, for instance, the processor and memory components described with respect to FIG. 8 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 900 can be implemented in a single chip. It is further contemplated that in certain embodiments the chip set or chip 900 can be implemented as a single "system on a chip." It is further contemplated that in certain embodiments a separate ASIC would not be used, for example, and that all relevant functions as disclosed herein would be performed by a processor or processors. Chip set or chip 900, or a portion thereof, constitutes a means for performing one or more steps of providing user interface navigation information associated with the availability of functions. Chip set or chip 900, or a portion thereof, constitutes a means for performing one or more steps of providing a service that determines a vehicle's location without user interaction when the vehicle is incapable of updating its current location.

In one embodiment, the chip set or chip 900 includes a communication mechanism such as a bus 901 for passing information among the components of the chip set 900. A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively or in addition, the processor 903 may include one or more microprocessors configured in tandem via the bus 901 to enable independent execution of instructions, pipelining, and multithreading. The processor 903 may also be accompanied with one or more specialized components to perform certain processing functions and tasks such as one or more digital signal processors (DSP) 907, or one or more application-specific integrated circuits (ASIC) 909. A DSP 907 typically is configured to process real-world signals (e.g., sound) in real time independently of the processor 903. Similarly, an ASIC 909 can be configured to performed specialized functions not easily performed by a more general purpose processor. Other specialized components to aid in performing the inventive functions described herein may include one or more field programmable gate arrays (FPGA), one or more controllers, or one or more other special-purpose computer chips.

In one embodiment, the chip set or chip 900 includes merely one or more processors and some software and/or firmware supporting and/or relating to and/or for the one or more processors. The processor 903 and accompanying components have connectivity to the memory 905 via the bus 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to provide a service that determines a vehicle's location without user interaction when the vehicle is incapable of updating its current location. The memory 905 also stores the data associated with or generated by the execution of the inventive steps.

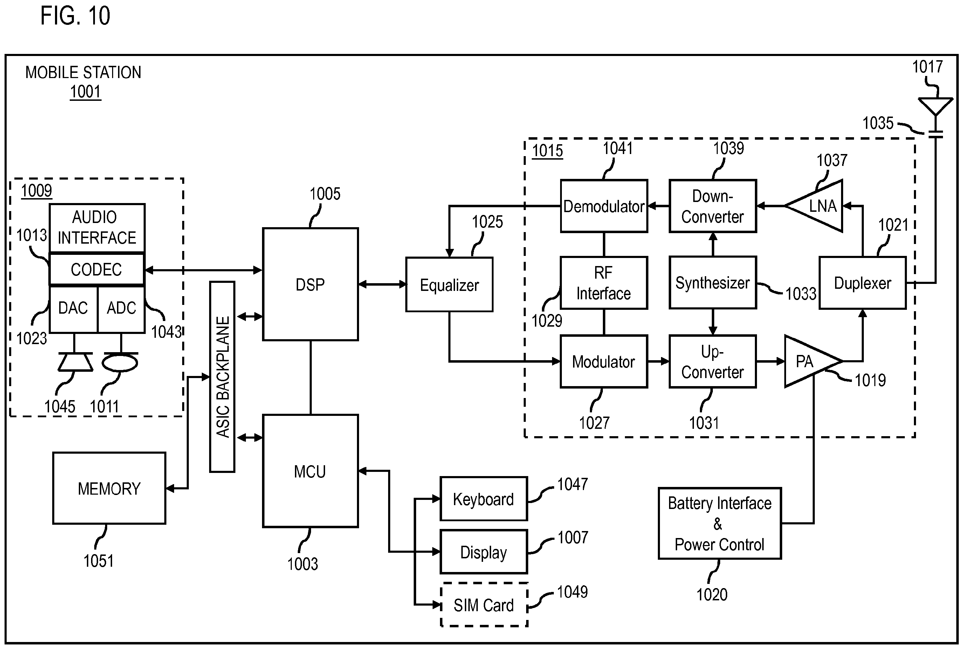

FIG. 10 is a diagram of exemplary components of a mobile terminal (e.g., handset) for communications, which is capable of operating in the system of FIG. 1, according to one embodiment. In some embodiments, mobile terminal 1001, or a portion thereof, constitutes a means for performing one or more steps of providing a service that determines a vehicle's location without user interaction when the vehicle is incapable of updating its current location. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 1003, a Digital Signal Processor (DSP) 1005, and a receiver/transmitter unit including a microphone gain control unit and a speaker gain control unit. A main display unit 1007 provides a display to the user in support of various applications and mobile terminal functions that perform or support the steps of providing a service that determines a vehicle's location without user interaction when the vehicle is incapable of updating its current location. The display 1007 includes display circuitry configured to display at least a portion of a user interface of the mobile terminal (e.g., mobile telephone). Additionally, the display 1007 and display circuitry are configured to facilitate user control of at least some functions of the mobile terminal. An audio function circuitry 1009 includes a microphone 1011 and microphone amplifier that amplifies the speech signal output from the microphone 1011. The amplified speech signal output from the microphone 1011 is fed to a coder/decoder (CODEC) 1013.

A radio section 1015 amplifies power and converts frequency in order to communicate with a base station, which is included in a mobile communication system, via antenna 1017. The power amplifier (PA) 1019 and the transmitter/modulation circuitry are operationally responsive to the MCU 1003, with an output from the PA 1019 coupled to the duplexer 1021 or circulator or antenna switch, as known in the art. The PA 1019 also couples to a battery interface and power control unit 1020.

In use, a user of mobile terminal 1001 speaks into the microphone 1011 and his or her voice along with any detected background noise is converted into an analog voltage. The analog voltage is then converted into a digital signal through the Analog to Digital Converter (ADC) 1023. The control unit 1003 routes the digital signal into the DSP 1005 for processing therein, such as speech encoding, channel encoding, encrypting, and interleaving. In one embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 1025 for compensation of any frequency-dependent impairments that occur during transmission though the air such as phase and amplitude distortion. After equalizing the bit stream, the modulator 1027 combines the signal with a RF signal generated in the RF interface 1029. The modulator 1027 generates a sine wave by way of frequency or phase modulation. In order to prepare the signal for transmission, an up-converter 1031 combines the sine wave output from the modulator 1027 with another sine wave generated by a synthesizer 1033 to achieve the desired frequency of transmission. The signal is then sent through a PA 1019 to increase the signal to an appropriate power level. In practical systems, the PA 1019 acts as a variable gain amplifier whose gain is controlled by the DSP 1005 from information received from a network base station. The signal is then filtered within the duplexer 1021 and optionally sent to an antenna coupler 1035 to match impedances to provide maximum power transfer. Finally, the signal is transmitted via antenna 1017 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 1001 are received via antenna 1017 and immediately amplified by a low noise amplifier (LNA) 1037. A down-converter 1039 lowers the carrier frequency while the demodulator 1041 strips away the RF leaving only a digital bit stream. The signal then goes through the equalizer 1025 and is processed by the DSP 1005. A Digital to Analog Converter (DAC) 1043 converts the signal and the resulting output is transmitted to the user through the speaker 1045, all under control of a Main Control Unit (MCU) 1003 which can be implemented as a Central Processing Unit (CPU).

The MCU 1003 receives various signals including input signals from the keyboard 1047. The keyboard 1047 and/or the MCU 1003 in combination with other user input components (e.g., the microphone 1011) comprise a user interface circuitry for managing user input. The MCU 1003 runs a user interface software to facilitate user control of at least some functions of the mobile terminal 1001 to provide a service that determines a vehicle's location without user interaction when the vehicle is incapable of updating its current location. The MCU 1003 also delivers a display command and a switch command to the display 1007 and to the speech output switching controller, respectively. Further, the MCU 1003 exchanges information with the DSP 1005 and can access an optionally incorporated SIM card 1049 and a memory 1051. In addition, the MCU 1003 executes various control functions required of the terminal. The DSP 1005 may, depending upon the implementation, perform any of a variety of conventional digital processing functions on the voice signals. Additionally, DSP 1005 determines the background noise level of the local environment from the signals detected by microphone 1011 and sets the gain of microphone 1011 to a level selected to compensate for the natural tendency of the user of the mobile terminal 1001.

The CODEC 1013 includes the ADC 1023 and DAC 1043. The memory 1051 stores various data including call incoming tone data and is capable of storing other data including music data received via, e.g., the global Internet. The software module could reside in RAM memory, flash memory, registers, or any other form of writable storage medium known in the art. The memory device 1051 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 1049 carries, for instance, important information, such as the cellular phone number, the carrier supplying service, subscription details, and security information. The SIM card 1049 serves primarily to identify the mobile terminal 1001 on a radio network. The card 1049 also contains a memory for storing a personal telephone number registry, text messages, and user specific mobile terminal settings.

While the invention has been described in connection with a number of embodiments and implementations, the invention is not so limited but covers various obvious modifications and equivalent arrangements, which fall within the purview of the appended claims.

## Claims

1. A method performed by at least one apparatus, comprising:
determining (301) a first set of dead reckoning data associated with at least one vehicle (111) from a first point to a second point within an area in which one or more non-dead reckoning location technologies are unavailable or not used;
determining if the vehicle is parked at the second point;
if the vehicle is determined to be parked at the second point, determining (303) a second set of dead reckoning data associated with at least one device (101) of at least one user of the at least one vehicle from the second point to a third point, wherein the one or more non-dead reckoning location technologies is available or used at the third point; and
processing (305) the first set of dead reckoning data and the second set of dead reckoning data to determine a location of the second point at which the vehicle is parked.

2. A method of claim 1, further comprising:
causing (505), at least in part, at least one update of the location of the second point on the at least one device, one or more location-based services, or a combination thereof.

3. A method according to any of claims 1 and 2, further comprising:
processing (401) of one or more sensors (109) associated with the at least one vehicle, the at least one device, or a combination thereof to determine the first set of dead reckoning data.

4. A method of claim 3, further comprising:
processing (403) of the one or more sensors to determine that the at least one vehicle has parked at the second point,
wherein the determination of the second set of dead reckoning data is based, at least in part, on the at least one vehicle being parked at the second point.

5. A method according to any of claims 1-4, further comprising:
processing (405) of the one or more sensors associated with the at least one device to determine the second set of dead reckoning data; and
causing (503), at least in part, at least one update of the second set of dead reckoning data, the location of the at least one device, or a combination thereof based, at least in part, on the one or more non-dead reckoning location technologies becoming available or used at the third point,
wherein the location of the second point is further based, at least in part, on the at least one update.

6. A method according to any of claims 1-5, wherein an initiation of the processing of the first set of dead reckoning data and the second set of dead reckoning data is based, at least in part, on the one or more non-dead reckoning location technologies becoming available or used at the third point.

7. A method according to any of claims 1-6, further comprising:
causing (501), at least in part, at least one transfer of the first set of dead reckoning data from the at least one vehicle to the at least one device based, at least in part, on the at least one vehicle being parked at the second point,
wherein the at least one transfer is based, at least in part, on one or more short-range wireless communication technologies.

8. A method according to any of claims 1-7, further comprising:
determining (507) location information associated with one or more other vehicles in close proximity to where the at least one vehicle has parked based, at least in part, on one or more queries from the at least one vehicle, the at least one device, or a combination thereof,
wherein the location of the second point is further based, at least in part, on the location information.

9. A method according to any of claims 1-8, wherein the one or more non-dead reckoning location technologies include, at least in part, global positioning system (GPS), cellular triangulation, Assisted GPS (A-GPS), or a combination thereof.

10. A method according to any of claims 3-9, wherein the one or more sensors include, at least in part, a GPS receiver, an altitude sensor, a magnetometer, a compass, a luminosity sensor, a near field communication (NFC) sensor, an acceleration sensor, or a combination thereof.

11. A method according to any of claims 1-10, wherein the first point is a point at which connectivity with the one or more non-dead reckoning location technologies is lost.

12. A method according to any of claims 1-11 performed by at least one service, wherein the at least one service is accessible via at least one interface.

13. An apparatus (900) comprising means configured to perform a method of any of claims 1-11.

14. An apparatus of claim 13, wherein the apparatus is a mobile phone (1001) further comprising:
user interface circuitry and user interface software configured to facilitate user control of at least some functions of the mobile phone through use of a display and configured to respond to user input; and
a display (1007) and display circuitry configured to display at least a portion of a user interface of the mobile phone, the display and display circuitry configured to facilitate user control of at least some functions of the mobile phone.

15. A computer program product including one or more sequences of one or more instructions which, when executed by one or more processors, cause an apparatus to at least perform the steps of a method of any of claims 1-11.

## Patentansprüche

1. Verfahren, das durch wenigstens eine Vorrichtung durchgeführt wird, umfassend:
Ermitteln (301) eines ersten Satzes von Koppelnavigationsdaten, die wenigstens einem Fahrzeug (111) zugeordnet sind, von einem ersten Punkt zu einem zweiten Punkt innerhalb eines Bereichs, in dem eine oder mehrere nicht-Koppelnavigations-Ortungstechnologien nicht verfügbar sind oder nicht genutzt werden;
Ermitteln, ob das Fahrzeug an dem zweiten Punkt geparkt ist;
falls ermittelt wird, dass das Fahrzeug an dem zweiten Punkt geparkt ist, Ermitteln (303) eines zweiten Satzes von Koppelnavigationsdaten, die wenigstens einer Vorrichtung (101) wenigstens eines Benutzers des wenigstens einen Fahrzeugs zugeordnet sind, von dem zweiten Punkt zu einem dritten Punkt, wobei die eine oder die mehreren nicht-Koppelnavigations-Ortungstechnologien an dem dritten Punkt verfügbar sind oder genutzt werden; und
Verarbeiten (305) des ersten Satzes von Koppelnavigationsdaten und des zweiten Satzes von Koppelnavigationsdaten, um einen Ort des zweiten Punktes zu ermitteln, an dem das Fahrzeug geparkt ist.

2. Verfahren nach Anspruch 1, ferner umfassend:
Veranlassen (505), zumindest teilweise, wenigstens einer Aktualisierung des Orts des zweiten Punktes an der wenigstens einen Vorrichtung, eines oder mehrerer standortbasierter Dienste oder einer Kombination davon.

3. Verfahren nach einem der Ansprüche 1 und 2, ferner umfassend:
Verarbeiten (401) eines oder mehrerer Sensoren (109), die dem wenigstens einen Fahrzeug, der wenigstens einen Vorrichtung oder einer Kombination davon zugeordnet sind, um den ersten Satz von Koppelnavigationsdaten zu ermitteln.

4. Verfahren nach Anspruch 3, ferner umfassend:
Verarbeiten (403) des einen oder der mehreren Sensoren, um zu ermitteln, dass das wenigstens eine Fahrzeug an dem zweiten Punkt geparkt ist,
wobei die Ermittlung des zweiten Satzes von Koppelnavigationsdaten zumindest teilweise darauf begründet ist, dass das wenigstens eine Fahrzeug an dem zweiten Punkt geparkt ist.

5. Verfahren nach einem der Ansprüche 1-4, ferner umfassend:
Verarbeiten (405) des einen oder der mehreren Sensoren, die der wenigstens einen Vorrichtung zugeordnet sind, um den zweiten Satz von Koppelnavigationsdaten zu ermitteln; und
Veranlassen (503), zumindest teilweise, wenigstens einer Aktualisierung des zweiten Satzes von Koppelnavigationsdaten, des Standorts der wenigstens einen Vorrichtung oder einer Kombination davon, zumindest teilweise darauf begründet, dass die eine oder die mehreren nicht-Koppelnavigations-Ortungstechnologien an dem dritten Punkt verfügbar werden oder genutzt werden,
wobei der Ort des zweiten Punktes ferner zumindest teilweise auf der wenigstens einen Aktualisierung basiert.

6. Verfahren nach einem der Ansprüche 1-5, wobei ein Initiieren der Verarbeitung des ersten Satzes von Koppelnavigationsdaten und des zweiten Satzes von Koppelnavigationsdaten zumindest teilweise darauf begründet ist, dass die eine oder die mehreren nicht-Koppelnavigations-Ortungstechnologien an dem dritten Punkt verfügbar werden oder genutzt werden.

7. Verfahren nach einem der Ansprüche 1-6, ferner umfassend:
Veranlassen (501), zumindest teilweise, wenigstens einer Übertragung des ersten Satzes von Koppelnavigationsdaten von dem wenigstens einen Fahrzeug zu der wenigstens einen Vorrichtung zumindest teilweise darauf begründet, dass das wenigstens eine Fahrzeug an dem zweiten Punkt geparkt ist,
wobei die wenigstens eine Übertragung zumindest teilweise auf einer oder mehreren drahtlosen Kommunikationstechnologien kurzer Reichweite basiert.

8. Verfahren nach einem der Ansprüche 1-7, ferner umfassend:
Ermitteln (507) von Standortinformationen, die einem oder mehreren sonstigen Fahrzeugen in unmittelbarer Nähe des Ortes zugeordnet sind, an dem das wenigstens eine Fahrzeug geparkt ist, zumindest teilweise basierend auf einer oder mehreren Abfragen von dem wenigstens einen Fahrzeug, der wenigstens einen Vorrichtung oder einer Kombination davon,
wobei der Ort des zweiten Punktes ferner zumindest teilweise auf den Standortinformationen basiert.

9. Verfahren nach einem der Ansprüche 1-8, wobei die eine oder die mehreren nicht- Koppelnavigations-Ortungstechnologien zumindest teilweise ein Globales Positionsbestimmungssystem (Global Positioning System, GPS), eine zellulare Triangulation, unterstütztes GPS (A-GPS), oder eine Kombination davon beinhalten.

10. Verfahren nach einem der Ansprüche 3-9, wobei der eine oder die mehreren Sensoren zumindest teilweise einen GPS-Empfänger, einen Höhensensor, ein Magnetometer, einen Kompass, einen Leuchtkraftsensor, einen Nahfeldkommunikations(Near Field Communication, NFC)-Sensor, einen Beschleunigungssensor oder eine Kombination davon beinhalten.

11. Verfahren nach einem der Ansprüche 1-10, wobei der erste Punkt ein Punkt ist, an dem eine Konnektivität mit der einen oder den mehreren nicht-Koppelnavigations-Ortungstechnologien verloren geht.

12. Verfahren nach einem der Ansprüche 1-11, das durch wenigstens einen Dienst durchgeführt wird, wobei auf den wenigstens einen Dienst über wenigstens eine Schnittstelle zugegriffen werden kann.

13. Vorrichtung (900), die Mittel enthält, die dazu eingerichtet sind, ein Verfahren nach einem der Ansprüche 1-11 durchzuführen.

14. Vorrichtung nach Anspruch 13, wobei die Vorrichtung ein Mobiltelefon (1001) ist, das ferner enthält:
Benutzerschnittstellenschaltkreise und Benutzerschnittstellensoftware, die dazu eingerichtet sind, eine Benutzersteuerung wenigstens einiger Funktionen des Mobiltelefons durch Nutzung eines Displays zu ermöglichen, und die dazu eingerichtet sind, auf ein Anwendereingabe zu reagieren; und
ein Display (1007) und Displayschaltkreise, die dazu eingerichtet sind, wenigstens einen Abschnitt einer Benutzerschnittstelle des Mobiltelefons anzuzeigen, wobei das Display und die Displayschaltkreise dazu eingerichtet sind, eine Benutzersteuerung wenigstens einiger Funktionen des Mobiltelefons zu ermöglichen.

15. Computerprogrammprodukt, das eine oder mehrere Sequenzen eines oder mehrerer Befehle beinhaltet, die, wenn sie durch einen oder mehrere Prozessoren ausgeführt werden, eine Vorrichtung dazu veranlassen, mindestens die Schritte eines Verfahrens nach einem der Ansprüche 1-11 durchzuführen.

## Revendications

1. Procédé, réalisé par au moins un appareil, comprenant les étapes consistant à :
déterminer (301) un premier ensemble de données de navigation à l'estime associées à au moins un véhicule (111) depuis un premier point jusqu'à un deuxième point dans une zone dans laquelle une ou plusieurs technologies de localisation qui ne sont pas des technologies de localisation de navigation à l'estime sont indisponibles ou ne sont pas utilisées ;
déterminer si le véhicule est stationné au niveau deuxième point ;
si le véhicule est déterminé comme être stationné au deuxième point, déterminer (303) un deuxième ensemble de données de navigation à l'estime associées à au moins un dispositif (101) d'au moins un utilisateur dudit au moins un véhicule depuis le deuxième point jusqu'à un troisième point, dans lequel lesdites une ou plusieurs technologies de localisation qui ne sont pas des technologies de localisation de navigation à l'estime sont disponibles ou utilisées au niveau du troisième point ; et
traiter (305) le premier ensemble de données de navigation à l'estime et le deuxième ensemble de données de navigation à l'estime pour déterminer la localisation du deuxième point au niveau duquel le véhicule est stationné.

2. Procédé selon la revendication 1, comprenant en outre l'étape consistant à :
provoquer (505), au moins en partie, au moins une mise à jour de la localisation du deuxième point sur lesdits au moins un dispositif, un ou plusieurs services basés sur de la localisation, ou une combinaison de ceux-ci.

3. Procédé selon l'une quelconque des revendications 1 et 2, comprenant en outre l'étape consistant à :
traiter (401) un ou plusieurs capteurs (109) associés auxdits au moins un véhicule, ledit au moins un dispositif, ou une combinaison de ceux-ci pour déterminer le premier ensemble de données de navigation à l'estime.

4. Procédé selon la revendication 3, comprenant en outre l'étape consistant à :
traiter (403) lesdits un ou plusieurs capteurs pour déterminer que ledit au moins un véhicule a été stationné au niveau du deuxième point,
dans lequel la détermination du deuxième ensemble de données de navigation à l'estime est réalisée sur la base, au moins en partie, du fait que ledit au moins un véhicule est stationné au niveau du deuxième point.

5. Procédé selon l'une quelconque des revendications 1 à 4, comprenant en outre les étapes consistant à :
traiter (405) lesdits un ou plusieurs capteurs associés auxdits au moins un dispositif pour déterminer le deuxième ensemble de données de navigation à l'estime ; et
provoquer (503), au moins en partie, au moins une mise à jour du deuxième ensemble de données de navigation à l'estime, de la localisation dudit au moins un dispositif, ou d'une combinaison de ceux-ci sur la base, au moins en partie, du fait que lesdites une ou plusieurs technologies de localisation qui ne sont pas des technologies de localisation de navigation à l'estime deviennent disponibles ou utilisées au niveau du troisième point,
dans lequel la localisation du deuxième point est en outre réalisée sur la base, au moins en partie, de ladite au moins une mise à jour.

6. Procédé selon l'une quelconque des revendications 1 à 5, dans lequel un lancement du traitement du premier ensemble de données de navigation à l'estime et du deuxième ensemble de données de navigation à l'estime est réalisé sur la base, au moins en partie, du fait que l'une ou plusieurs technologies de localisation qui ne sont pas des technologies de localisation de navigation à l'estime deviennent disponibles ou utilisées au niveau du troisième point.

7. Procédé selon l'une quelconque des revendications 1 à 6, comprenant en outre l'étape consistant à :
provoquer (501), au moins en partie, au moins un transfert du premier ensemble de données de navigation à l'estime depuis ledit au moins un véhicule vers ledit au moins un dispositif sur la base, au moins en partie, du fait que ledit au moins un véhicule est stationné au niveau du deuxième point,
dans lequel ledit au moins un transfert est réalisé sur la base, au moins en partie, d'une ou de plusieurs technologies de communication sans fil à courte portée.

8. Procédé selon l'une quelconque des revendications 1 à 7, comprenant en outre les étapes consistant à :
déterminer (507) des informations de localisation associées à un ou plusieurs autres véhicules à proximité immédiate de l'endroit où ledit au moins un véhicule a été stationné sur la base, au moins en partie, d'une ou de plusieurs requêtes provenant dudit au moins un véhicule, dudit au moins un dispositif, ou d'une combinaison de ceux-ci,
dans lequel la localisation du deuxième point est en outre réalisée sur la base, au moins en partie, des informations de localisation.

9. Procédé selon l'une quelconque des revendications 1 à 8, dans lequel lesdites une ou plusieurs technologies de localisation qui ne sont pas des technologies de localisation de navigation à l'estime comprennent, au moins en partie, un système de localisation global (GPS), une triangulation cellulaire, un GPS assisté (A-GPS), ou une combinaison de ceux-ci.

10. Procédé selon l'une quelconque des revendications 3 à 9, dans lequel lesdits un ou plusieurs capteurs comprennent, au moins en partie, un récepteur GPS, un capteur d'altitude, un magnétomètre, une boussole, un capteur de luminosité, un capteur de communication en champ proche (NFC), un capteur d'accélération, ou une combinaison de ceux-ci.

11. Procédé selon l'une quelconque des revendications 1 à 10, dans lequel le premier point est un point au niveau duquel la connectivité avec l'une ou les plusieurs technologies de localisation qui ne sont pas des technologies de localisation de navigation à l'estime est perdue.

12. Procédé selon l'une quelconque des revendications 1 à 11, réalisé par au moins un service, dans lequel ledit au moins un service est accessible via au moins une interface.

13. Appareil (900) comprenant des moyens configurés pour exécuter un procédé selon l'une quelconque des revendications 1 à 11.

14. Appareil selon la revendication 13, dans lequel l'appareil est un téléphone mobile (1001) comprenant en outre :
un ensemble de circuit d'interface utilisateur et un logiciel d'interface utilisateur configurés pour faciliter la commande par l'utilisateur d'au moins certaines fonctions du téléphone mobile au moyen de l'utilisation d'un affichage et configuré pour répondre à une entrée de l'utilisateurs ; et
un affichage (1007) et un ensemble de circuit d'affichage configurés pour afficher au moins une partie d'une interface utilisateur du téléphone mobile, l'affichage et l'ensemble de circuit d'affichage étant configurés pour faciliter la commande par l'utilisateur d'au moins certaines fonctions du téléphone mobile.

15. Produit de programme informatique comprenant une ou plusieurs séquences d'une ou de plusieurs instructions qui, lorsqu'elles sont exécutées par un ou plusieurs processeurs, amènent un appareil à au moins exécuter les étapes d'un procédé selon l'une quelconque des revendications 1 à 11.
